**Europäisches Patentamt**

**European Patent Office**

**Office européen des brevets**

(19)

(11) Veröffentlichungsnummer: **0 489 130 B1**

(12) **EUROPÄISCHE PATENTSCHRIFT**

(45) Veröffentlichungstag der Patentschrift: **08.03.95**

(51) Int. Cl.⁶: **B23K 11/25**

(21) Anmeldenummer: **91910830.8**

(22) Anmeldetag: **23.06.91**

(86) Internationale Anmeldenummer:
**PCT/DE91/00522**

(87) Internationale Veröffentlichungsnummer:
**WO 92/00161 (09.01.92 92/02)**

(54) **VERFAHREN ZUR KORREKTUR VON REGELPARAMETERN EINER PROZESSREGELUNG, INSBESONDERE ZUR ERHALTUNG DES DYNAMIKBEREICHES (REGELBEREICHES) DER PROZESSREGELUNG WÄHREND DES PROZESSVERLAUFES UND VORRICHTUNG ZUR DURCHFÜHRUNG DES VERFAHRENS.**

(30) Priorität: **23.06.90 DE 4020342**

(43) Veröffentlichungstag der Anmeldung:
**10.06.92 Patentblatt 92/24**

(45) Bekanntmachung des Hinweises auf die
Patenterteilung:
**08.03.95 Patentblatt 95/10**

(84) Benannte Vertragsstaaten:
**CH DE FR IT LI NL SE**

(56) Entgegenhaltungen:
**DE-A- 3 545 158**
**DE-A- 3 711 771**

**Elektrotechnik, vol. 71, No. 7, 13 October 1989, (Wurzburg DE), M. Prodinger : "Mehr als nur steuern - Steuerungen für das Widerstandsschweissen". pages 34-38**

(73) Patentinhaber: **INPRO INNOVATIONSGESELL-SCHAFT FÜR FORTGESCHRITTENE PRODUK-TIONSSYSTEME IN DER FAHRZEUGINDU-STRIE MBH**
**Nürnberger Str. 68/69**
**D-10787 Berlin (DE)**

(72) Erfinder: **ANDERS, Michael**
**Nürnberger Str. 68/69**
**D-1000 Berlin 30 (DE)**
Erfinder: **KIRMSSE, Helmut**
**Nürnberger Str. 68/69**
**D-1000 Berlin 30 (DE)**
Erfinder: **WESSELMANN, Ludger**
**Nürnberger Str. 68/69**
**D-1000 Berlin 30 (DE)**
Erfinder: **ROGOS, Jürgen**
**Nürnberger Str. 68/69**
**D-1000 Berlin 30 (DE)**

EP 0 489 130 B1

(74) Vertreter: **Hoffmann, Klaus-Dieter, Dipl.-Ing.
Kurfürstendamm 182
D-10707 Berlin (DE)**

## Beschreibung

Die Erfindung betrifft ein Verfahren zur Korrektur von Regelparametern einer Prozeßregelung, insbesondere zur Erhaltung des Dynamikbereiches (Regelbereiches) der Prozeßregelung während des Prozeßverlaufes, bei dem während des Prozeßverlaufes Prozeßgrößen (Meßgrößen) automatisch erfaßt, der Prozeßregelung zur Verarbeitung zugeführt und mit den Werten eines gespeicherten Prozeßverlaufes verglichen werden und die Prozeßregelung in den ablaufenden Prozeß regelnd eingreift.

Die Erfindung betrifft ferner eine Vorrichtung zur Durchführung des Verfahrens gemäß Anspruch 1 bis 5 mit einem den Prozeß ausführenden und während des Prozeßverlaufes Prozeßgrößen (Meßgrößen) automatisch erfassenden System, und mit einem Regelsystem mit einem einen vorgegebenen Sollwert liefernden Sollwertspeicher sowie einem mit dessen Ausgang eingangsseitig und mit dem Eingang des den Prozeß ausführenden Systems ausgangsseitig verbundenen, in den ablaufenden Prozeß regelnd eingreifenden Regler, dessen Eingang mit dem Ausgang des den Prozeß ausführenden Systems verbunden ist, und mit einem Rechner.

Die Erfindung betrifft auch ein Verfahren zur Erhaltung des Dynamikbereiches (Regelbereiches) der Prozeßregelung beim Schweißen, insbesondere zur Kompensation des Elektrodenverschleißes beim Widerstandspunktschweißen, bei dem während des Schweißprozesses Prozeßgrößen (Meßgrößen) automatisch erfaßt, einer Prozeßregelung zur Verarbeitung zugeführt und mit den Werten einer gespeicherten optimierten Schweißung (Startwert) verglichen werden und die Prozeßregelung in den ablaufenden Schweißprozeß regelnd eingreift.

Die Erfindung betrifft weiterhin eine Vorrichtung zur Durchführung des Verfahrens gemäß Anspruch 7 bis 16, mit einer Schweißeinrichtung mit einem Wechselstromsteller, der mit Schweißelektroden der Schweißeinrichtung über einen Schweißtrafo gekoppelt ist, und mit einer Regeleinrichtung mit einem einen vorgegebenen Startwert liefernden Sollwertspeicher, einem mit dessen Ausgang eingangsseitig und mit dem Eingang des Wechselstromstellers der Schweißeinrichtung ausgangsseitig verbundenen, in den ablaufenden Schweißprozeß regelnd eingreifenden Regler und einer mit den Schweißelektroden gekoppelten Sensorik zur Aufnahme der Prozeßgrößen (Meßgrößen), deren Ausgang zum Eingang des Reglers geschaltet ist, und mit einem Rechner.

Speziell in der Fertigungstechnik gibt es eine Vielzahl von Prozessen, die wiederkehrend sind bzw. sich ständig wiederholen, aber in sich abgeschlossen sind, wie z.B. einzelne Fertigungsschritte in einer Serienfertigung. Diese Prozesse werden häufig durch eine Prozeßregelung geführt, mit der ungünstige Auswirkungen von Störeinflüssen auf den einzelnen Prozeßverlauf kompensiert werden sollen.

Treten in aufeinanderfolgenden Prozessen wiederholt Störungen dergestalt auf, daß eine Systematik erkennbar wird - zum Beispiel:
- gleiche Störungen an gleichen Werkstückabschnitten,
- zunehmende Verschleißerscheinungen von Werkzeugen,
- Toleranzabweichungen in Bauteilchargen,
- dynamische Bahnfehler von Produktionseinrichtungen,

so können diese in vielen Fällen von der Prozeßregelung noch kompensiert werden, aber der Dynamikbereich des Prozeßreglers wird unnötig in Anspruch genommen. Zusätzlich auftretende, stochastische Störungen können dann unter Umständen nicht mehr ausreichend kompensiert werden, der Einsatzbereich der Prozeßregelung wird beschränkt. Gelingt es aber, durch Anpassung der Führungsgröße wie zum Beispiel:
- automatische Bahnprogramm-Optimierung oder
- Startwertanpassung

die "erwarteten Fehler" zu vermeiden, so kann die Prozeßregelung zugunsten der Ausregelung zufälliger Fehler entlastet werden.

Bei herkömmlichen adaptiven Regelverfahren können die Reglerparameter wie zum Beispiel der Verstärkungsfaktor oder die Integrationszeitkonstante eines PI-Reglers bei Änderung der Regelstrecke automatisch korrigiert werden. Dies ist aber häufig aus Stabilitäts- oder anderen Gründen nicht gewünscht. Außerdem greifen diese Verfahren nur auf vorangegangene Regelungszyklen zurück und nicht auf Erfahrungen aus vorangegangenen, abgeschlossenen Prozessen.

Zum Beispiel im Bereich des Widerstandspunktschweißens wird die Qualität von Punktschweißverbindungen von über 100 Faktoren beeinflußt. Diese sind zum Teil statischer Natur - wie z.B. die gerätetechnische Auslegung der Schweißeinrichtung -, langsam veränderlich - wie z.B. der Verschleiß der Elektroden - oder nur kurzfristig, d.h. nur während der augenblicklichen Schweißung, wirkend - wie z.B. schlechte Passung der Bauteile oder ein zu geringer Abstand des Schweißpunktes zu einem benachbarten Punkt. Während die statischen Faktoren in der Grundeinstellung der Schweißparameter (Elektrodenkraft, Schweißstrom etc.) ihre Berücksichtigung finden, ist es Aufgabe eines Prozeßregelsystems, den Einfluß der übrigen Parameter, bzw. Parameteränderungen, auf das Schweißergebnis zu kompensieren. Stellgröße für die Regelung ist häufig der Schweißstrom. Parameteränderungen werden als Störungen des Schweißprozesses aufgefaßt.

Bei einem bekannten Verfahren für die Prozeßregelung während des Punkt-, Buckel- oder Rollennahtverschweißens der eingangs erwähnten Art (DE-A1-37 11 771) werden während des Schweißprozesses Prozeßgrößen erkannt, gespeichert und einer Steuereinrichtung zur Verarbeitung zugeführt und mit den Werten einer vorgegebenen optimierten Schweißung verglichen und die Steuereinrichtung greift regelnd in den ablaufenden Schweißprozeß ein. Um durch das Messen und Verarbeiten mehrerer Prozeßgrößen (mechanische und elektrische) in Realzeit den Schweißprozeß und seine Veränderungen verhältnismäßig genau zu erfassen und für eine gleichmäßige Qualität der Schweißung während des aktuellen Schweißvorganges durch Regelprozesse zu sorgen, erfolgt bei diesem bekannten Verfahren ohne Verwendung von Kalibrierschweißungen und deren Sollkurven der Schweißvorgang unter Kontrolle mittels der in der Steu-er/Speichereinrichtung abgelegten Bewertungs-schemen und Tabellen, die die Prozeßgröße und ihre Zusammenhänge abhängig von der Schweißlinsenbildung darstellen und den Einfluß der Stellgrößen auf diese Zusammenhänge festlegen und wird die Abweichung des Prozeßverlaufes durch mehr als eine Stellgröße (Stromflußwinkel, Elektrodenkraft und Schweißzeit) geregelt.

Auch für ein derartiges bekanntes Verfahren und die Vorrichtung zu seiner Durchführung gilt wie in den meisten entsprechenden Fällen (z.B. DE-A1-23 62 520 und DE-A1-26 57 889), daß Punkt-schweißregelsysteme nur einen sehr eingeschränk-ten Regelbereich (Dynamikbereich) aufweisen. Gro-ße Änderungen der Stellgröße im Verlauf eines Schweißprozesses können in der Regel nicht zugelassen werden, um die Stabilität der Regelung zu bewahren und um die technologischen Grenzen der Schweißeinrichtung (z.B. des Schweißtransformators) nicht zu verletzen.

Zum Ausgleich des Elektrodenverschleißes muß das Prozeßregelsystem, als Reaktion auf die veränderten Prozeßsignale, den Schweißstrom erhöhen. Mit zunehmenden Verschleiß wird hierdurch allerdings der Dynamikbereich des Regelsystems einseitig in Anspruch genommen. Zusätzlich auftretende Störungen können dann unter Umständen nicht mehr kompensiert werden, der Einsatzbereich der Schweißeinrichtung mit Regelsystem wird be-schränkt.

Schweißeinrichtungen ohne Regelsysteme kön-nen den Elektrodenverschleiß durch schrittweise Erhöhung des Schweißstromes berücksichtigen. Die Schrittweiten und -höhen müssen allerdings vorher durch Versuch ermittelt werden.

Der Erfindung liegt die Aufgabe zugrunde, ein Verfahren und eine Vorrichtung der eingangs erwähnten Art zur Verfügung zu stellen, mit dem bzw. der aus wiederholbaren, in sich abgeschlossenen Prozessen mit Prozeßregelung Erfahrungen aus vorangegangenen Prozeßverläufen zur Korrektur von Regelparametern für nachfolgende Prozesse genutzt werden können. Angestrebt wird auch die automatische Aufrechterhaltung ohne Be-schränkung des Dynamikbereiches (Regelberei-ches) der Prozeßregelung während des Prozeßver-laufes und insbesondere beim Widerstandspunkt-schweißen die Gewährleistung einer in jedem Fall sicheren Kompensation des Elektrodenverschleißes auch bei zusätzlich auftretenden Störungen.

Diese Aufgabe wird erfindungsgemäß dadurch gelöst, daß

- mittels eines Adaptionsverfahrens Informatio-nen über den Prozeßverlauf vorangegange-ner, in sich abgeschlossener, wiederholbarer Regelprozesse erfaßt und gespeichert werden,

- aus den gespeicherten Informationen der zu-rückliegenden Regelprozesse über den je-weils gesamten Prozeßverlauf als auch be-züglich jeweils fester Prozeßzeitpunkte wie-derholt auftretende Trends in den Prozeßver-läufen beschreibende Charakteristika rechne-risch ermittelt,

- mit den Werten der zugeordneten gespeicherten Prozeßverläufe verglichen und

- aus den Vergleichsergebnissen Korrekturwerte der Regelparameter der Prozeßregelung errechnet und dieser zugeführt werden.

Die erfindungsgemäße Vorrichtung zur Durch-führung des erfindungsgemäßen Verfahrens zeich-net sich aus durch ein Adaptionssystem zur Regelparameterkorrektur, das zum Erfassen und Speichern von Informationen über den Prozeßverlauf vorangegangener, in sich abgeschlossener, wiederholbarer Regelprozesse den Rechner aufweist, der eingangsseitig einerseits mit dem Ausgang des den Prozeß ausführenden Systems über ein erstes Interface sowie mit dem Ausgang des Reglers über ein zweites Interface und andererseits über ein drittes Interface mit dem Ausgang des Sollwertspeichers sowie ausgangsseitig über ein viertes Interface mit dem Eingang des Sollwertspeichers verbunden ist, wobei der Rechner nach Speicherung der über das erste und das zweite Interface erfaßten Informationen der zurückliegenden Regelprozesse über den jeweils gesamten Prozeßverlauf als auch bezüglich fester Prozeßzeitpunkte Charakteristika rechnerisch ermittelt, die wiederholt auftreten und Trends in den Prozeßverläufen beschreiben, dann diese Charakteristika mit den über das dritte Interface aus dem Sollwertspeicher ausgele-senen, entsprechend vorgegebenen Sollwerten ver-gleicht, aus den Vergleichsergebnissen Korrektur-werte der Regelparameter der Prozeßregelung errechnet und diese über das vierte Interface als neue Sollwerte in den Sollwertspeicher einschreibt.

Das erfindungsgemäße Verfahren beeinflußt nicht die Reglerparameter, sondern Regelparameter wie z.B. die Führungsgrößen. Das Übertragungsverhalten des Reglers bleibt unverändert, mit der Adaption von Führungsgrößen gelingt sowohl eine gleitende Anpassung an sich stetig verändernde Regelstrecken als auch eine Optimierung von Führungsgrößen, die zuvor nur eher grob vorbestimmt wurden. Geeignete Informationen, die im Adaptionsverfahren über den Prozeßverlauf aus vorangegangenen Regelprozessen erfaßt und gespeichert werden, sind z.B. die Stellgrößenänderungen, die der Prozeßregler in den einzelnen Prozessen zum Erreichen des Regelzieles einstellen muß. Weiter geeignet als zu speichernde Informationen sind die Regelabweichungen oder auch die Regelgrößen selber.

Das erfindungsgemäße Verfahren zur Erhaltung des Dynamikbereiches (Regelbereiches) der Prozeßregelung beim Schweißen, insbesondere zur Kompensation des Elektrodenverschleißes beim Widerstandspunktschweißen zeichnet sich dadurch aus, daß mittels eines Adaptionsverfahrens die Stellgrößenänderungen der einzelnen Schweißung erfaßt und gespeichert werden, und daß aus den gespeicherten Stellgrößenänderungen die Korrektur der Regelparameter abgeleitet und als neuer vorgegebener Wert optimierter Schweißung der Prozeßregelung für die nächste Schweißung zugeführt wird.

Vorteilhafte Weiterbildungen dieses Verfahrens ergeben sich aus den Patentansprüchen 7 bis 16.

Die erfindungsgemäße Vorrichtung zur Durchführung des Verfahrens zur Erhaltung des Dynamikbereiches (Regelbereiches) der Prozeßregelung beim Schweißen zeichnet sich durch eine Adaptionseinrichtung zur automatischen Korrektur der Regelparameter aus den Stellgrößenänderungen vorangegangener Schweißungen aus, die den Rechner aufweist, der eingangsseitig einerseits mit dem Ausgang des Reglers über ein die Stellgrößenänderungen der einzelnen Schweißung erfassendes erstes Interface und andererseits über ein zweites Interface mit dem Ausgang des Sollwertspeichers zum Auslesen und Ablegen des vorgegebenen Startwertes in dem Regler sowie ausgangsseitig mit dem Eingang des Sollwertspeichers über ein drittes Interface verbunden ist, von dem der vom Rechner ermittelte Startwert in den Sollwertspeicher einschreibbar ist.

Vorteilhafte Weiterbildungen dieser Vorrichtung ergeben sich aus den Patentansprüchen 18 bis 21.

Die Erfindung verbindet den Vorteil bei der Verwendung eines Regelsystems zur Kompensation mehr oder weniger zufällig auftretender Störungen, mit dem Vorteil einer Schweißsteuerung, die durch vordefinierte Stromverstellungen den Verschleiß der Elektroden ausgleicht. Da dieser Ausgleich automatisch erfolgt, sind aufwendige Versuche zur Ermittlung der Stromeinstellwerte nicht erforderlich. Es werden, neben dem Elektrodenverschleiß, auch mögliche andere, langsam veränderliche Einflußgrößen mit kompensiert.

Bei gleichbleibender Schweißpunktqualität kann die Standzeit der Elektroden auch bei Verwendung eines Prozeßregelsystems voll ausgenutzt und unter Umständen noch erhöht werden. Der Dynamikbereich der Regelung wird nicht einseitig eingeschränkt.

Die Erfindung schafft eine Erweiterungskomponente für ein vorhandenes Prozeßregelsystem zum Widerstandspunktschweißen.

Als Stellgröße für den Schweißvorgang wird vorzugsweise der Phasenanschnittwinkel für den Thyristor-Stromsteller gewählt. Werte für den Phasenanschnitt werden bei Schweißsteuerungen fest vorgegeben, bei Verwendung von Prozeßregelsystemen werden sie aus den Meßsignalen abgeleitet. Um den Schweiß- und damit auch den Regelprozeß in Gang zu setzen, muß zu Beginn einer Schweißung (z.B. für die erste Stromperiode) ein Startwert für den Phasenanschnittwinkel vorgegeben werden. Durch die richtige Wahl dieses Wertes werden die eingangs genannten Einflußfaktoren statischer Natur berücksichtigt.

Während einer Schweißung detektiert der Regler anhand der Meßsignale einen von den Vorgaben abweichenden Prozeßverlauf, der durch langsam veränderliche oder durch nur kurzfristig auftretende Störungen hervorgerufen wird. Für den nachfolgenden Regelzyklus wird der Phasenanschnittwinkel verändert, um die Abweichungen im Rahmen der vorgegebenen Schweißzeit möglichst zu kompensieren.

Die Adaptionseinrichtung erfaßt und speichert die Stellgrößenänderungen der einzelnen Schweißung mit Hilfe eines ersten Interfaces. Unmittelbar im Anschluß an die Schweißung bestimmt ein Rechensystem aus den gespeicherten Werten den arithmetischen Mittelwert. In einem weiteren Rechenschritt wird für die nächste Schweißung ein neuer Startwert bestimmt. In die Berechnung fließen die Werte aus mehreren Schweißungen gemäß nachstehender Formel ein:

$$\beta_{i+1} = (\beta_i \cdot (G\text{-}1) \, / \, G) + \overline{\beta}_i \, / \, G \qquad (1)$$

G : Gedächtnisfaktor (z.B.: G = 5000, beim Punktschweißen an unbeschichtetem Stahlblech 0,8 • 0,8 mm; Schweißzeit: 160 ms, Elektrodenkraft: 2,2 kN)

$\beta_i$ : Startwert der Stellgröße der letzten Schweißung

$\overline{\beta}_i$ : arithmetischer Mittelwert der Stellgrö-

ße der letzten Schweißung

$\beta_{i+1}$ : Startwert der Stellgröße für die nächste Schweißung

Der originäre Wert ($\beta_o$) für den Phasenanschnittwinkel der ersten Stromperiode ('vorgegebener Startwert') wird über ein zweites Interface aus dem Parameterspeicher des Reglers ausgelesen und in der Adaptionseinrichtung gespeichert. Dieses kann schon bei der Inbetriebnahme bzw. bei Erneuerung der Elektroden erfolgen. Mittels eines dritten Interfaces wird der neu berechnete Startwert in den Parameterspeicher eingeschrieben und steht damit für den nächsten Schweißprozeß zur Verfügung.

Die Auslegungen dieser Interfaces sind abhängig vom Aufbau des Regelsystems. Sie können z.B. aus digitalen Schnittstellen oder auch aus Analog-Digital- bzw. Digital-Analog-Wandlern bestehen.

Die Anzahl der Schweißungen, die zur Parameterkorrektur herangezogen werden, hängt zum einen von dem zur Verfügung stehenden Dynamikbereich des Regelsystems, zum anderen von den statischen Einflußgrößen auf den Schweißprozeß ab. In der Adaptionseinrichtung wird dieses durch den 'Gedächtnisfaktor' berücksichtigt. Werte für diesen Faktor liegen in der Größenordnung der Schweißpunktanzahl, die maximal mit einem Elektrodenpaar geschweißt werden können, wobei von einem Schweißsteuerungssystem ohne schrittweise Erhöhung der Stromwerte ausgegangen werden muß. Im Einzelfall ist dieser Wert empirisch zu bestimmen und der Adaptionseinrichtung über eine Bedienerschnittstelle (z. B. Sichtgerät mit Tastatur) einzugeben.

Eine Protokollierung der aktuellen Schweißparameter ist hierdurch ebenfalls möglich. Trends in den Parameterverläufen können somit sichtbar gemacht werden, um den Bediener Hinweise für eine evtl. vorzunehmende Korrektur einzelner Parameter - wie z.B. dem Gedächtnisfaktor - zu geben.

Das erfindungsgemäße Verfahren kann ebenfalls angewandt werden, wenn unterschiedliche Schweißaufgaben - wie z.B. wechselnde Blechstärken beim Schweißen komplexer Bauteile - mit einer Schweißeinrichtung zu bearbeiten sind. Solche Änderungen statischer Einflußgrößen auf den Schweißprozeß werden durch entsprechende Änderungen der Schweißparameter (z.B.: Stromhöhe und -dauer) berücksichtigt und in Form einer entsprechenden Anzahl von 'Schweißprogrammen' in dem Regelsystem gespeichert. Die Adaptionseinrichtung muß für jedes dieser Programme einen korrigierten Startwert berechnen. Dies erfolgt anhand der Daten der zuletzt vorgenommenen Schweißung durch Bestimmung der relativen Änderung des neuen Startwertes bezogen auf den originären Wert:

$$P = (100 \cdot (\beta_{i+1} - \beta_o) / \beta_o) / G + P_{alt} \qquad (2)$$

$P_{alt}$ : Korrekturfaktor alt

P : Korrekturfaktor neu

$\beta_o$ : vorgegebener Startwert für die Stellgröße

G : Gedächtnisfaktor

Das Ergebnis ist ein prozentualer Korrekturfaktor, mit dem auch bei einem Schweißprogrammwechsel ein gültiger, neuer Startwert errrechnet werden kann:

$$\beta_{i+1,j} = \beta_{o,j} + P \cdot \beta_{o,j} / 100 \qquad (3)$$

Das erfindungsgemäße Verfahren wird für Service- und Wartungsarbeiten verwendet, indem aus den Änderungen statischer Einflußgrößen Startsignale für Service- und Wsrtungsarbeiten oder Maßnahmen zum Werkzeugwechsel ermittelt werden, um auf diese Weise den Dynamikbereich der Prozeßregelung zu verbessern, insbesondere können bei der Prozeßregelung beim Widerstandspunktschweißen Startsignale für die mechanische Bearbeitung der abgenutzten Elektrodenkappen, z.B. durch Abfräsen, ermittelt werden, um den Schweißstrom in einen günstigen Dynamikbereich des Reglers zurückzuführen. Weiterhin können bei programmgesteuerten Werkzeugmaschinen Startsignale für den Werkzeugwechsel aufgrund des Verschleißes in ähnlicher Weise vorgegeben werden.

Mit einem erfindungsgemäßen Gerät, das aus einer Kombination der erfindungsgemäßen Vorrichtung nach Patentanspruch 17 oder 18 mit einer Verschleißüberwachungseinrichtung und einer Einrichtung zur Nachbearbeitung von abgenutzten Elektrodenkappen besteht, kann die Qualität beim Punktschweißen deutlich verbessert werden. Dieses Gerät bestimmt selbständig aus dem Verschleißgrad der Elektrodenkappen den Zeitpunkt der Elektrodenbearbeitung und mit ihm können außerdem die seit dem letzten Elektrodenkappenwechsel geschweißten Punkte gezählt werden. Durch Verschleiß der Elektrodenkappen sinkt die Stromdichte, so daß die Schweißleistung nachläßt. Der Regler des Gerätes detektiert die Abweichungen und regelt aus. Wird im Trend der letzten Punkte deutlich, daß der Schweißstrom über ein ungünstiges Maß erhöht werden muß, wird das Startkommando für die mechanische Bearbeitung der Elektrodenkappen gegeben.

Mit diesem erfindungsgemäßen Gerät kann in vorteilhafter Weise die Standmenge der Elektrodenkappen verlängert und das langwierige Ermitteln der Punktzahl für die mechanische Bearbeitung eingespart werden.

Liegen bei einer Roboterbahnbewegung Abweichungen zwischen Soll- und Istbahn vor, können diese sensorisch erfaßt und durch Stellglieder aktuell ausgeglichen werden. Treten bei gleichen Werkstücken an den gleichen Stellen immer gleiche Fehler auf, können diese auch durch Korrekturen des Bahnprogramms (Führungsgröße) vermieden werden. Der aktuelle Stellgrößenaufwand wird dadurch verringert. Diese systematischen Bahnfehler werden zusammen mit den zufälligen sensorisch erfaßt. Durch Mittelwertbildung über mehrere Werkstücke kann der systematische Anteil erkannt und durch vektorielle Addition automatisch zur Korrektur des Bahnprogramms verwendet werden. Läuft dieser Vorgang ständig prozeßbegleitend ab, können auch langsam veränderliche systematische Fehler kompensiert werden.

Die Erfindung wird nun anhand der Figuren der Zeichnungen erläutert. In diesen sind:

Fig. 1 bzw. Fig. 2

ein Blockschaltbild einer Ausführungsform der erfindungsgemäßen Vorrichtung zur Korrektur von Regelparametern einer Prozeßregelung,

Fig. 3

ein Diagramm, das den Verlauf der Startwertänderung bei einer Versuchsserie von ca. 14 000 Schweißpunkten zeigt,

Fig. 4

ein Diagramm, das den Anstieg der Schweißstromwerte bei der Versuchsserie wiedergibt und damit die Wirkung der automatischen Parameterkorrektur verdeutlicht, und

Fig. 5

ein Blockschaltbild eines Gerätes zur Überwachung des Verschleißes von Elektrodenkappen und zur Nachbearbeitung abgenutzter Elektrodenkappen.

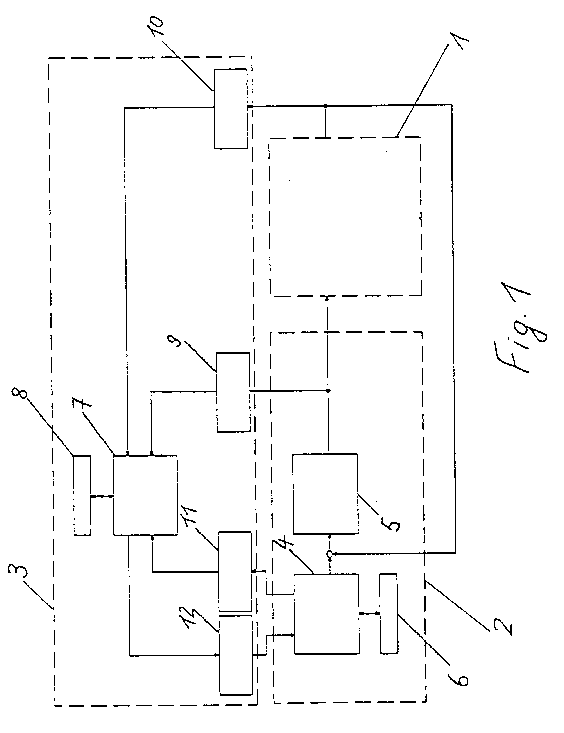

Wie Fig. 1 zeigt, weist die Vorrichtung zur Korrektur von Regelparametern einer Prozeßregelung ein den Prozeß ausführendes System 1, das während des Prozeßverlaufes die Prozeßgrößen (Meßgrößen) automatisch erfaßt, ein mit dem den Prozeß ausführenden System 1 gekoppeltes Regelsystem 2 sowie ein mit ersterem und dem Regelsystem 2 gekoppeltes Adaptionssystem 3 zur Regelparameterkorrektur auf. Das Regelsystem 2 weist einen einen Sollwert liefernden Sollwertspeicher 4 sowie einen mit dessen Ausgang eingangsseitig und mit dem Eingang des den Prozeß ausführenden Systems 1 ausgangsseitig verbundenen Regler 5 auf, der in den ablaufenden Prozeß regelnd eingreift. Der Ausgang des den Prozeß ausführenden Systems 1 ist mit dem Eingang des Reglers 5 verbunden. Der Sollwertspeicher 4 ist mit einer Bedienung 6 zur Eingabe des Sollwertes verbunden.

Das Adaptionssystem 3 weist zum Erfassen und Speichern von Informationen über den Prozeßverlauf vorangegangener, in sich abgeschlossener, wiederholbarer Regelprozesse einen Rechner 7 auf, der mit einer Bedienung 8 gekoppelt ist. Der Rechner 7 ist eingangsseitig einerseits mit dem Ausgang des den Prozeß ausführenden Systems 1 über ein zweites Interface 10 sowie mit dem Ausgang des Reglers 5 über ein erstes Interface 9 und andererseits über ein drittes Interface 11 mit dem Ausgang des Sollwertspeichers 4 verbunden. Der Ausgang des Rechners 7 ist wiederum über ein viertes Interface 12 mit dem Eingang des Sollwertspeichers 4 verbunden.

Zu Beginn eines Prozesses wird dem Sollwertspeicher 4 über die Bedienung 6 ein vorgegebener Wert eingegeben und dem Regler 5 zugeführt. Die während des Prozesses automatisch erfaßten Prozeßgrößen (Meßgrößen) werden vom Ausgang des den Prozeß ausführenden Systems 1 dem Regler 5 eingangsseitig eingegeben. Anhand der Meßsignale detektiert der Regler 5 während des Prozesses einen von den Vorgaben des Sollwertspeichers 4 abweichenden Prozeßverlauf und greift regelnd in den ablaufenden Prozeß ein. Das Adaptionssystem 3 erfaßt über das erste und das zweite Interface 9 bzw. 10 Informationen über den Prozeßverlauf vorangegangener in sich abgeschlossener, wiederholbarer Regelprozesse und speichert diese in dem Rechner 7. Aus den gespeicherten Informationen der zurückliegenden Regelprozesse über den jeweils gesamten Prozeßverlauf als auch bezüglich jeweils fester Prozeßzeitpunkte ermittelt der Rechner Charakteristika, die wiederholt auftretende Trends in den Prozeßverläufen beschreiben. Diese Charakteristika vergleicht der Rechner 7 dann mit den über das dritte Interface 11 aus dem Sollwertspeicher 4 ausgelesenen entsprechenden vorgegebenen Sollwerten, errechnet aus den Vergleichsergebnissen Korrekturwerte der Regelparameter der Prozeßregelung und schreibt diese über das vierte Interface 12 als neue Sollwerte in den Sollwertspeicher 4 ein.

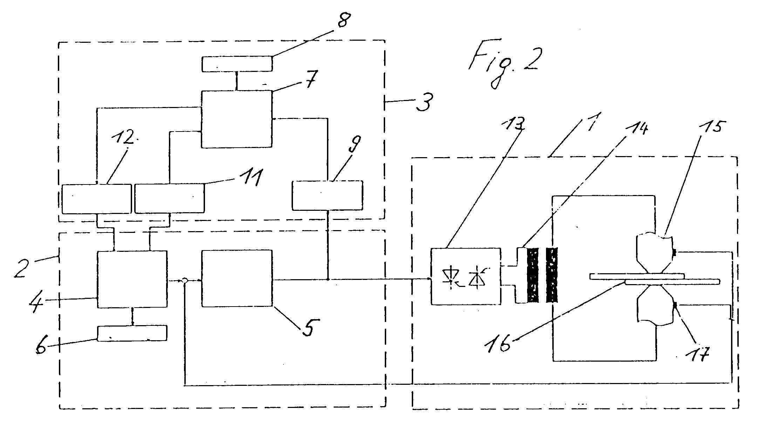

Wie Fig. 2 zeigt, weist die Vorrichtung zur Kompensation des Elektrodenverschleißes beim widerstandspunktschweißen eine Schweißeinrichtung 1, die mit dieser gekoppelte Regeleinrichtung 2 und die mit dieser gekoppelte Adaptionseinrichtung 3 zur automatischen Korrektur von Regelparametern auf. Ein Wechselstromsteller 13 in Form eines Thyristor-Stromstellers der Schweißeinrichtung 1 ist über einen Schweißtransformator 14 mit Schweißelektroden 15 verbunden, mittels der die Punktschweißungen am Werkzeug 16 vorgenommen werden. Die Schweißelektroden 15 können als Punktschweißzangen ausgeführt oder in einer Standmaschine integriert sein. Die Schweißeinrichtung 1 wird mit Wechselstrom betrieben.

Die Regeleinrichtung 2 weist den Sollwertspeicher 4 auf, dem zu Beginn einer Schweißung (z.B. für die erste Stromperiode) ein der optimierten Schweißung entsprechender Startwert für den Phasenanschnittwinkel über die Bedienung 6 eingegeben wird und dessen Ausgang mit dem Eingang eines Reglers 5 der Regeleinrichtung 2 verbunden ist. Eine mit den Schweißelektroden 15 der Schweißeinrichtung 1 gekoppelte Sensorik 17 der Regeleinrichtung 2 ist ebenfalls mit dem Eingang des Reglers 5 verbunden, erfaßt die Prozeßgrößen (Meßgrößen), die dem Regler 5 ebenso wie der vorgegebene Startwert eingegeben werden. Anhand der Meßsignale detektiert der Regler 5 während der Schweißung einen von den Vorgaben des Sollwertspeichers 4 abweichenden Prozeßverlauf, der durch langsam veränderliche oder durch kurzfristig auftretende Störungen hervorgerufen worden ist. Die am Ausgang des Reglers 5 anfallende Stellgröße für z.B. den Phasenanschnittwinkel wird dem Wechselstromsteller 13 zugeführt, wodurch in den ablaufenden Schweißprozeß regelnd eingegriffen wird.

Die Adaptionseinrichtung 3 zur automatischen Korrektur der Regelparameter erfaßt mit Hilfe des ersten, mit dem Ausgang des Reglers 5 der Regeleinrichtung 2 verbundenen Interfaces 9 die Stellgrößenänderungen der einzelnen Schweißungen, die in dem mit der Bedienung 8 gekoppelten Rechner 7 der Adaptionseinrichtung 3 gespeichert werden, der eingangsseitig mit dem ersten Interface 9 verbunden ist. Über das dritte Interface 11, das mit der Ausgangsseite des Sollwertspeichers 4 der Regeleinrichtung 2 und mit der Eingangsseite des Rechners 7 der Adaptionseinrichtung 3 verbunden ist, wird z.B. der originäre Wert ($\beta_o$) für den Phasenanschnittwinkel der ersten Stromperiode, d.h. der vorgegebene Startwert aus dem Sollwertspeicher 4 ausgelesen und in dem Rechner 7 gespeichert. Das kann schon bei der Inbetriebnahme der Vorrichtung bzw. bei der Erneuerung der Schweißelektroden 6 erfolgen. Der Rechner 7 bestimmt unmittelbar im Anschluß an die Schweißung aus den gespeicherten Werten den arithmetischen Mittelwert sowie darauf den neuen Startwert für die nächste Schweißung. Mittels des vierten, mit dem Ausgang des Rechners 7 und der Eingangsseite des Sollwertspeichers 4 der Regeleinrichtung 2 verbundenen Interfaces 12 wird der neu berechnete Startwert in den Sollwertspeicher 4 der Regeleinrichtung 2 eingeschrieben und steht somit für den nächsten Schweißprozeß zur Verfügung.

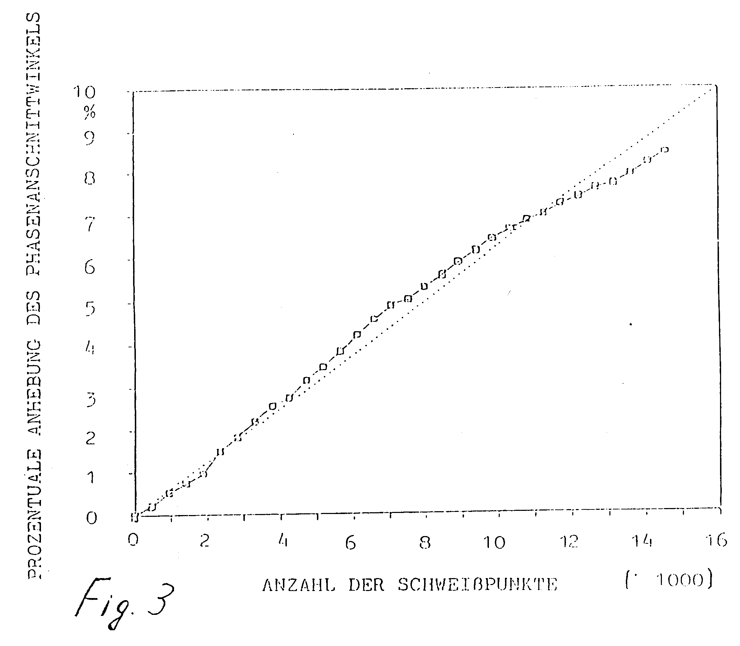

Aus dem Diagramm der Fig. 3, auf dessen Abszisse die Anzahl der Schweißpunkte und auf dessen Ordinate die prozentuale Anhebung des Phasenanschnittwinkels, die hier der relativen Verlängerung der Stromflußdauer pro Stromperiode entspricht, aufgetragen wird, ergibt sich der Verlauf der Startwertänderung bei einer Versuchsserie von ca. 14 000 Schweißpunkten.

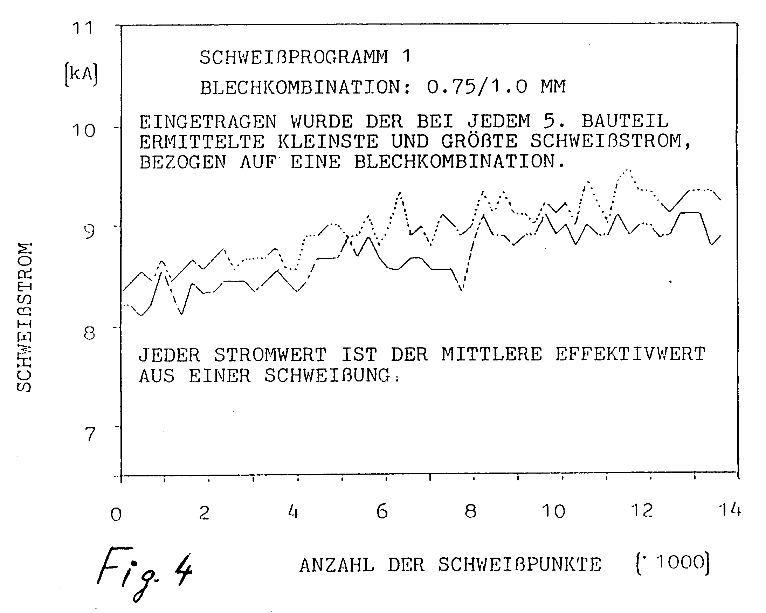

Aus dem Diagramm der Fig. 4, in dem über der Anzahl der Schweißpunkte der Schweißstrom ausgetragen ist, geht der Anstieg der Schweißstromwerte bei dem Versuch gemäß Fig. 3 und damit die Wirkung der automatischen Parameterkorrektur durch die Adaptionseinrichtung 3 hervor.

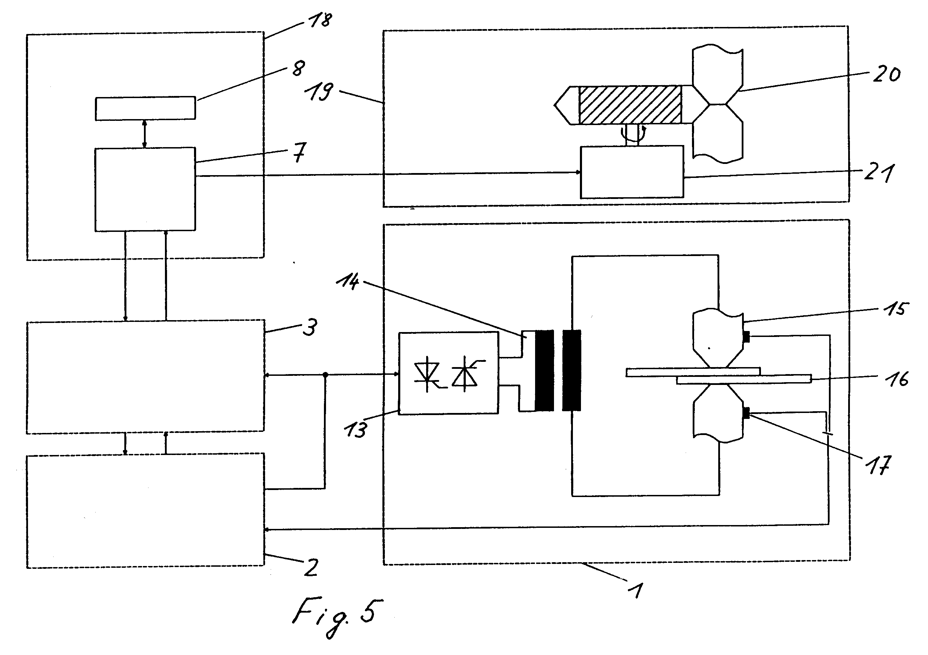

Fig. 5 zeigt ein Blockschaltbild eines Gerätes zur Überwachung des Verschleißes von Elektrodenkappen und zur Nachbearbeitung abgenutzter Elektrodenkappen, das aus einer Kombination der zuvor beschriebenen Vorrichtung mit einer Verschleißüberwachungseinrichtung 18 und einer Einrichtung 19 zur Nachbearbeitung von abgenutzten Elektrodenkappen 20 mittels einer Elektrodenfräseinrichtung 21 besteht. Die Schweißeinrichtung 1 ist entsprechend wie in Fig. 2 aufgebaut und wird daher nicht im einzelnen beschrieben. Die von der Sensorik 16 der Schweißeinrichtung 1 erfaßten Meßsignale werden dem Regelsystem 2 zugeführt, das entsprechend den Fig. 1 und 2 mit dem Adaptionssystem zur Korrektur der Regelparameter gekoppelt, das wiederum mit der Schweißeinrichtung 1 gekoppelt ist. Das Verschleißüberwachungssystem 18, das Bestandteil des Adaptionssystems nach den Fig. 1 und 2 ist, ist in Fig. 5 aus letzterem herausgezogen dargestellt, und weist den Rechner 7 auf, der mit der Bedienung 8 gekoppelt ist. Dem Rechner 7 werden von dem Adaptionssystem 3 die statischen Einflußgrößen eingegeben. Der Rechner 7 ist ausgangsseitig einerseits zur Rückmeldung mit dem Adaptionssystem und andererseits mit der Elektrodenfräseinrichtung 21 der Einrichtung 19 zur Nachbearbeitung abgenutzter Elektrodenkappen 20 gekoppelt und führt dieser das entsprechende Startsignal zu. Das Gerät bestimmt selbständig aus dem Verschleiß den Zeitpunkt der Elektrodenbearbeitung in der eingangs beschriebenen Weise.

## Patentansprüche

1. Verfahren zur Korrektur von Regelparametern einer Prozeßregelung, insbesondere zur Erhaltung des Dynamikbereiches der Prozeßregelung während des Prozeßverlaufes, bei dem während des Prozeßverlaufes Prozeßgrößen automatisch erfaßt, der Prozeßregelung zur Verarbeitung zugeführt und mit den Werten eines gespeicherten Prozeßverlaufes verglichen werden und die Prozeßregelung in den ablaufenden Prozeß regelnd eingreift, dadurch gekennzeichnet, daß

   - mittels eines Adaptionsverfahrens Informationen über den Prozeßverlauf vorangegangener, in sich abgeschlossener, wiederholbarer Regelprozesse erfaßt und gespeichert werden,

   - aus den gespeicherten Informationen der zurückliegenden Regelprozesse über den jeweils gesamten Prozeßverlauf als auch bezüglich jeweils fester Prozeßzeitpunkte wiederholt auftretende Trends in den Prozeßverläufen beschreibende Charakteristika rechnerisch ermittelt,
- mit den Werten der zugeordneten gespeicherten Prozeßverläufe verglichen und
- aus den Vergleichsergebnissen Korrekturwerte der Regelparameter der Prozeßregelung errechnet und dieser zugeführt werden.

2. Verfahren nach Anspruch 1, <u>dadurch gekennzeichnet</u>, daß als Informationen die Stellgrößenänderungen gespeichert werden, die von der Prozeßregelung in den einzelnen Prozeßverläufen zum Erreichen des Regelziels einzustellen sind.

3. Verfahren nach Anspruch 1, <u>dadurch gekennzeichnet</u>, daß als Informationen die Regelabweichungen gespeichert werden.

4. Verfahren nach Anspruch 1, <u>dadurch gekennzeichnet</u>, daß als Informationen die Regelgrößen selber gespeichert werden.

5. Verfahren nach Anspruch 1 bis 4, <u>dadurch gekennzeichnet</u>, daß beim Adaptionsverfahren
- die Informationen über den Prozeßverlauf vorangegangener, in sich abgeschlossener, wiederholbarer Regelprozesse mittels eines ersten Interfaces ('A') erfaßt und gespeichert werden
- nach statistischer Ermittlung der wiederholt auftretenden Trends in den Prozeßverläufen beschreibenden Charakteristika die zugehörigen Werte der gespeicherten Prozeßverläufe über ein zweites Interface ('B') aus der Prozeßregelung in das Adaptionsverfahren eingeführt und mit den Charakteristika verglichen werden, und
- die aufgrund der Vergleichsergebnisse errechneten Korrekturwerte der Regelparameter der Prozeßregelung über ein drittes Interface ('C') zugeführt werden.

6. Verfahren zur Erhaltung des Dynamikbereiches der Prozeßregelung beim Schweißen, insbesondere zur Kompensation des Elektrodenverschleißes beim Widerstandspunktschweißen, bei dem während des Schweißprozesses Prozeßgrößen automatisch erfaßt, einer Prozeßregelung zur Verarbeitung zugeführt und mit den Werten einer gespeicherten optimierten Schweißung verglichen werden und die Prozeßregelung in den ablaufenden Schweißprozeß regelnd eingreift, <u>dadurch gekennzeichnet</u>, daß mittels eines Adaptionsverfahrens die Stellgrößenänderungen der einzelnen Schweißung erfaßt und gespeichert werden, und daß aus den gespeicherten Stellgrößenänderungen die Korrektur der Regelparameter abgeleitet und als neuer vorgegebener Wert optimierter Schweißung der Prozeßregelung für die nächste Schweißung zugeführt wird.

7. Verfahren nach Anspruch 6, <u>dadurch gekennzeichnet</u>, daß beim Adaptionsverfahren
- die Stellgrößenänderungen der einzelnen Schweißung mittels eines ersten Interfaces ('A') erfaßt und gespeichert werden,
- unmittelbar im Anschluß an die Schweißung aus den gespeicherten Werten deren Mittelwert errechnet wird,
- darauf ein neuer Startwert der Stellgröße für die nächste Schweißung unter Einbeziehung des vorgegebenen originären Wertes optimierter Schweißung rechnerisch bestimmt wird, der über ein zweites Interface ('B') aus der Prozeßregelung in das Adaptionsverfahren eingeführt worden ist, und
- die Zuführung des ermittelten neuen Startwertes (Wertes optimierter Schweißung) in die Prozeßregelung über ein drittes Interface ('C') erfolgt.

8. Verfahren nach Anspruch 6 und 7, <u>dadurch gekennzeichnet</u>, daß in die Berechnung des neuen Startwertes für die nächste Schweißung Werte aus mehreren Schweißungen gemäß folgender Formel eingeführt werden:

$$\beta_{i+1} = (\beta_i \cdot (G-1)/G) + \overline{\beta}_i/G$$

wobei

G      Gedächtnisfaktor (z.B.: G = 5000, beim Punktschweißen an unbeschichtetem Stahlblech 0,8 • 0,8 mm; Schweißzeit: 160 ms, Elektrodenkraft: 2,2 kN)

$\beta_i$      Startwert der Stellgröße der letzten Schweißung

$\overline{\beta}_i$      arithmetischer Mittelwert der Stellgröße der letzten Schweißung

$\beta_{i+1}$      Startwert der Stellgröße für die nächste Schweißung

9. Verfahren gemäß Anspruch 7 und 8, <u>dadurch gekennzeichnet</u>, daß das erste, zweite und dritte Interface in Abhängigkeit vom Aufbau der Prozeßregelung ausgelegt werden.

10. Verfahren nach Anspruch 6 bis 9, <u>dadurch gekennzeichnet</u>, daß die Anzahl der Schweißungen, die zur Parameterkorrektur herangezogen werden, in Abhängigkeit von dem zur Ver-

fügung stehenden Dynamikbereich der Prozeß-regelung und von den statischen Einflußgrößen auf den Schweißprozeß gewählt wird.

11. Verfahren nach Anspruch 8 und 10, dadurch gekennzeichnet, daß die Werte für den Faktor G in der Größenordnung der Schweißpunktanzahl gewählt werden, die maximal mit einem Elektrodenpaar geschweißt werden können, wobei von einer Schweißsteuerung ohne schrittweise Erhöhung der Stromwerte ausgegangen wird.

12. Verfahren nach Anspruch 8, dadurch gekennzeichnet, daß der Faktor G empirisch ermittelt und dem Adaptionsverfahren über eine Schnittstelle eingegeben wird.

13. Verfahren nach den Patentansprüchen 6 bis 12, dadurch gekennzeichnet, daß die aktuellen Schweißparameter automatisch protokolliert und Trends in den Parameterverläufen sichtbar gemacht werden.

14. Verfahren nach Anspruch 6, dadurch gekennzeichnet, daß das Adaptionsverfahren bei der Bearbeitung unterschiedlicher Schweißaufgaben mit einer Schweißeinrichtung angewendet wird, wobei die Änderungen statischer Einflußgrößen auf den Schweißprozeß durch entsprechende Änderungen der Schweißparameter berücksichtigt und in Form einer entsprechenden Anzahl von Programmen entsprechende Schweißprozesse in die Prozeßregelung eingespeichert wird und durch das Adaptionsverfahren für jedes der Programme ein korrigierter Startwert ermittelt wird.

15. Verfahren nach Anspruch 14, dadurch gekennzeichnet, daß die Ermittlung des korrigierten Startwertes für jedes der Programme im Adaptionsverfahren anhand der Daten der zuletzt vorgenommenen Schweißung durch die Bestimmung der relativen Änderung des neuen Startwertes bezogen auf den originären Startwert erfolgt, wobei für den Korrekturfaktor

$$P = (100 \cdot (\beta_{i+1} - \beta_o)/\beta_o) / G + P_{alt}$$

und für den prozentualen Korrekturfaktor, mit dem auch bei einem Schweißprogrammwechsel ein gültiger, neuer Startwert errechnet wer-den kann, gilt

$$\beta_{i+1,j} = \beta_{o,j} + P \cdot \beta_{o,j}/100$$

und $\beta_o$ den vorgegebenen Startwert für die Stellgröße darstellt und j = 1, 2, 3 ... n (mit n = Anzahl der Schweißprogramme) ist.

16. Verfahren nach Anspruch 6, dadurch gekennzeichnet, daß als Stellgröße für die Prozeßregelung der Schweißstrom gewählt wird.

17. Vorrichtung zur Durchführung des Verfahrens nach Anspruch 1 bis 5, mit einem den Prozeß ausführenden und während des Prozeßverlaufes Prozeßgrößen automatisch erfassenden System, und mit einem Regelsystem (2) mit einem einen vorgegebenen Sollwert liefernden Sollwertspeicher (4) sowie einem mit dessen Ausgang eingangsseitig und mit dem Eingang des den Prozeß ausführenden Systems ausgangsseitig verbundenen, in den ablaufenden Prozeß regelnd eingreifenden Regler (5), dessen Eingang mit dem Ausgang des den Prozeß ausführenden Systems verbunden ist und mit einem Rechner (7), gekennzeichnet durch ein Adaptionssystem (3) zur Regelparameterkorrektur, das zum Erfassen und Speichern von Informationen über den Prozeßverlauf vorange-gangener, in sich abgeschlossener, wiederhol-barer Regelprozesse den Rechner (7) aufweist, der eingangsseitig einerseits mit dem Ausgang des den Prozeß ausführenden Systems (1) über ein zweites Interface (10) sowie mit dem Ausgang des Reglers (5) über ein erstes Interface (9) und andererseits über ein drittes Interface (11) mit dem Ausgang des Sollwertspeichers (4) sowie ausgangsseitig über ein viertes Interface (12) mit dem Eingang des Sollwertspeichers (4) verbunden ist, wobei der Rechner (7) nach Speicherung der über das erste und das zweite Interface (9 bzw. 10) erfaßten Informationen der zurückliegenden Regelprozesse über den jeweils gesamten Prozeßverlauf als auch bezüglich fester Prozeßzeitpunkte Charakteristika rechnerisch ermittelt, die wiederholt auftreten und Trends in den Prozeßverläufen beschreiben, dann diese Charakteristika mit den über das dritte Interface (11) aus dem Sollwertspeicher (4) ausgelesenen, entsprechend vorgegebenen Sollwerten vergleicht, aus den Vergleichsergebnissen Korrekturwerte der Regelparameter der Prozeßregelung errechnet und diese über das vierte Interface (12) als neue Sollwerte in den Sollwertspeicher (4) einschreibt.

18. Vorrichtung zur Durchführung des Verfahrens gemäß Anspruch 6 bis 16, mit einer Schweißeinrichtung (1) mit einem Wechselstromsteller (13), der mit Schweißelektroden (15, 16) der Schweißeinrichtung über einen Schweißtrafo (14) gekoppelt ist, und mit einer Regeleinrichtung (2) mit einem einen vorgegebenen Startwert liefernden Sollwertspeicher (4), einem mit dessen Ausgang eingangsseitig und mit dem Eingang des Wechselstromstellers der Schweißeinrichtung ausgangsseitig verbundenen, in den ablaufenden Schweißprozeß regelnd eingreifenden Regler und einer mit den Schweißelektroden (15, 16) gekoppelten Sensorik (17) zur Aufnahme der Prozeßgrößen (Meßgrößen), deren Ausgang zum Eingang des Reglers geschaltet ist, und mit einem Rechner (7), gekennzeichnet durch eine Adaptionseinrichtung (3) zur automatischen Korrektur der Regelparameter aus den Stellgrößenänderungen vorangegangener Schweißungen, die den Rechner (7) aufweist, der eingangsseitig einerseits mit dem Ausgang des Reglers (5) über ein die Stellgrößenänderungen der einzelnen Schweißung erfassendes erstes Interface (9) und andererseits über ein zweites Interface (10) mit dem Ausgang des Sollwertspeichers (4) zum Auslesen und Ablegen des vorgegebenen Startwertes in dem Rechner (7) sowie ausgangsseitig mit dem Eingang des Sollwertspeichers (4) über ein drittes Interface (11) verbunden ist, von dem der vom Rechner (7) ermittelte neue Startwert in den Sollwertspeicher (4) einschreibbar ist.

19. Vorrichtung nach Anspruch 17 und 18, dadurch gekennzeichnet, daß die Interface (9, 10, 11, 12) der Adaptionseinrichtung (3) aus digitalen Schnittstellen bestehen.

20. Vorrichtung nach Anspruch 18, dadurch gekennzeichnet, daß das erste und das dritte Interface (9, 11) aus Analog-Digital-Wandlern und das vierte Interface (12) aus einem Digital-Analog-Wandler bestehen.

21. Vorrichtung nach Anspruch 18, dadurch gekennzeichnet, daß der Wechselstromsteller (13) ein Thyristor-Stromsteller ist.

22. Verwendung des Verfahrens nach Anspruch 1 für Service- und Wartungsarbeiten, indem aus den Änderungen statischer Einflußgrößen Startsignale für die Service- und Wartungsarbeiten ermittelt werden.

23. Verwendung des Verfahrens nach Anspruch 1 zum Vorgeben von Startsignalen für den Werkzeugwechsel bei programmgesteuerten Werkzeugmaschinen.

24. Verwendung des Verfahrens nach Anspruch 1 beim Widerstandspunktschweißen zur Ermittlung von Startsignalen für die mechanische Bearbeitung abgenutzter Elektrodenkappen, um den Schweißstrom in den für die Prozeßregelung geeigneten Dynamikbereich zurückzuführen.

25. Verwendung des Verfahrens nach Anspruch 1 zur Kompensation systematischer Bahnfehler einer Roboterbahnbewegung durch Korrektur des die Führungsgröße der Prozeßregelung darstellenden Bahnprogramms, wobei die systematischen Bahnfehler mit den zufälligen Bahnfehlern zusammen sensorisch erfaßt werden und durch Mittelwertbildung über mehrere Werkstücke der systematische Anteil der Bahnfehler erkannt und durch vektorielle Addition automatisch zur Korrektur des Bahnprogramms verwendet wird.

## Claims

1. Method for the correction of regulation parameters of a process control system, in particular for maintaining the dynamic range (regulating range) of the process control system during the course of the process, in which during the course of the process, process variables (measured quantities) are automatically detected, supplied to the process control system for processing, and compared with the values of a stored course of process, and the process control system intervenes regulatingly in the process in progress, **characterized in**
   - that by means of an adaptation process information data about the course of the process of preceding self-contained repeatable regulating processes are detected and stored,
   - from the store data of prior regulating processes over the in each instance entire course of the process as well as also with respect to in each instance fixed process points in time characteristics are determined which describe mathematically repeatedly occurring trends in the courses of the process,
   - compared with the values of the associated stored courses of the process, and
   - from the results of the comparison correction values of the regulation parameters of the process control system are calculated and supplied to it.

2. Method as stated in Claim 1, **characterized in** that as information data are stored the changes of the manipulated variables which must be set by the process control system in the individual courses of the process in order to achieve the goal of the regulation.

3. Method as stated in Claim 1, **characterized in** that as information data are stored the regulation deviations.

4. Method as stated in Claim 1, **characterized in** that as information data are stored the regulation variables themselves.

5. Method as stated in Claim 1 to 4, **characterized in** that the adaptation process
   - the information data about the course of the process of preceding self-contained repeatable regulation processes are detected by means of a first interface ('A') and are stored,
   - after the determination of the characteristics describing repeatedly occurring trends in the courses of the process, the associated values of the stored courses of the process are introduced via a second interface ('B') from the process control system into the adaptation process and compared with the characteristics, and
   - the correction values of the regulation parameters calculated on the basis of the results of the comparison are supplied to the process control system via a third interface ('C').

6. Method for maintaining the dynamic range (regulation range) of the process control system during welding, in particular for compensating the electrode wear in resistance spot welding in which during the welding process, process variables (measured quantities) are detected automatically, supplied to a process control system for processing and compared with the values of a stored optimized weld process (initial value), and the process control system intervenes regulatingly in the welding process in progress, **characterized in** that by means of an adaptation process the changes of the manipulated variables of the individual welding processes are detected and stored, and that from the stored changes of the manipulated variables the correction of the regulation parameters is derived and supplied as the new given value of optimized welding to the process control system for the next welding process.

7. Method as stated in Claim 6, **characterized in** that in the adaptation process
   - the changes of the manipulated variables of the individual welding processes are detected by means of a first interface ('A') and stored,
   - immediately following the welding process the mean value of the stored values is calculated,
   - subsequently a new initial value of the manipulated variable is determined mathematically for the next welding process including the given original value of optimized welding, which is introduced via a second interface ('B') from the process control system into the adaptation process, and
   - supplying the determined new initial value (value of optimized welding) into the process control system via a third interface ('C') takes place.

8. Method as stated in Claim 6 and 7, **characterized in** that into the calculation of the new initial value for the next welding process variables are introduced from several welding processes according to the formula:

$$\beta_{i+1} = (\beta_i * (G-1)/G) + \overline{\beta_i}/G$$

wherein
G      is the memory factor (for example: G = 5000, in spot welding on uncoated steel sheet 0.8 * 0.8 mm; welding time: 160 ms, electrode force: 2.2 kN)
$\beta_i$      the initial value of the manipulated variable of the last welding process
$\overline{\beta_i}$      the arithmetic mean value of the manipulated variable of the last welding process
$\beta_{i+1}$      the initial value of the manipulated variable for the next welding process.

9. Method as stated in Claim 7 and 8, **characterized in** that the first, second, and third interface are layed out as a function of the design of the process control system.

10. Method as stated in Claim 6 to 9, **characterized in** that the number of welding processes which are utilized for the parameter correction is selected as a function of the dynamic range of the process control system available and of the static variables exerting influence onto the welding process.

11. Method as stated in Claim 8 and 10, **characterized in** that the values for the factor G (memory factor) are selected in the order of magnitude of the maximum number of welding spots which can be welded with an electrode pair wherein a welding control without stepwise increase of the current values serves as the basis.

12. Method as stated in Claim 8, **characterized in** that the factor G (memory factor) is determined empirically and entered into the adaptation process via an interface.

13. Method as stated in Clams 6 to 12, **characterized in** that the current welding parameters are logged automatically and trends in the parameters are displayed.

14. Method as stated in Claim 6, **characterized in** that the adaptation process is applied in the completion of diverse welding tasks with one welding device, wherein the changes of static variables exerting influence on the welding process are taken into consideration through corresponding changes of the welding parameters and stored in the form of a corresponding number of programs of corresponding welding processes in the process control system and through the adaptation method is determined a corrected initial value for each of the programs.

15. Method as stated in Claim 14, **characterized in** that the determination of the corrected initial value for each of the programs in the adaptation process takes place on the basis of the data of the last completed welding though the determination of the relative changes of the new initial value relative to the original initial value wherein for the correction factor

$$P = (100 * (\beta_{i+1} - \beta_0)/\beta_0) / G + P_{old}$$

and for the percentage correction factor with which even in the case of a welding program change a valid new initial value can be calculated applies:

$$\beta_{i+1,j} = \beta_{0,j} + P * \beta_{0,j}/100$$

and $\beta_0$ represents the given initial value for the manipulated variable and $j = 1, 2, 3 ...n$ (with n = number of welding programs).

16. Method as stated in Claim 6, **characterized in** that as the manipulated variable for the process control is selected the welding current.

17. Arrangement for carrying out the method as stated in Claim 1 to 5, with a system carrying out the process and automatically detecting during the course of the process process variables (measured quantities), and with a regulating system with a nominal value memory supplying a given nominal value, as well as a regulator connected with its output on the input side and with the input of the system carrying out the process at the output side and intervening regulatingly in the process in progress, whose input is connected with the output of the system carrying out the process, **characterized by** an adaptation system (3) for the correction of the regulation parameters, comprising for the detection and storage of data about the course of the process of preceding self-contained repeateable regulating process a computer (7) which is connected on the input side with the output of the system (1) carrying out the process via a second interface (10) as well as with the output of the regulator (5) via a first interface (9) on the one hand, and, on the other hand, via a third interface (11) with the output of the nominal value memory (4) as well as on the output side via a fourth interface (12) with the input of the nominal value memory (4), wherein the computer (7) after storing the information data detected via the first and the second interface (9 or 10) of the prior regulating processes over the in each instance entire course of the porcess as well as also with respect to fixed process points in time mathematically determines characteristics which describe repeatedly occurring trends in the courses of the process, subsequently compares these characteristics with the corresponding given nominal values read from the nominal value memory (4) via the third interface (11) calculates on the basis of the results of the comparison correction values of the regulation parameters of the process control system, and writes these into the nominal value memory (4) via the fourth interface (12) as the new nominal values.

18. Arrangement for carrying out the method according to Claim 6 to 16, with a welding device with an alternating current actuator coupled with welding electrodes of the welding device via a welding transformer, and with a regulating device with a nominal value memory supplying a given initial value, a regulator intervening regulatingly into the welding process in progress and connected with the output of the nominal value memory at the input side and with the input of the alternating current actuator of the welding device at the output side, and a sensor system coupled with the welding electrodes for sensing the process variables (measured quantities) whose output is switched to the input of the regulator, **characterized by** an adaptation device (3) for the automatic correction of the regulation parameters from the changes of the manipulated variables of preceding welding processes, comprising a computer (7) connected on the input side, on the one hand, with the output of the regulator (5) via a first interface (9) detecting the changes of the manipulated variables of the individual welding processes and, on the other hand, via a second interface (10) with the output of the nominal value memory (4) for reading out and depositing the given initial value in the computer (7) as well as on the output side with the input of the nominal value memory (4) via a third interface (11) from which the new initial value determined by the computer (7) can he written into the nominal value memory (4).

19. Arrangement as stated in Claim 17 and 18, **characterized in** that the interface (9, 10, 11, 12) of the adaptation device (3) comprises digital interfaces.

20. Arrangement as stated in Claim 18, **characterized in** that the first and the third interface (9, 11) comprise analog to digital converters and the fourth interface (12) comprises a digital to analog converter.

21. Arrangement as stated in Claim 18, **characterized in** that the alternating current actuator (13) is a thyristor current actuator.

22. Use of the method as stated in Claim 1 for service and maintenance work in that from the changes of static influencing variables starting signals for the service and maintenance work are determined.

23. Use of the method as stated in Claim 1 for giving starting signals for the tool change in program-controlled machine tools.

24. Use of the method as stated in Claim 1 in resistance spot welding for determining starting signals for the mechanical working of worn electrode tips in order to guide the welding current back to the dynamic range suitable for the process control.

25. Use of the method as stated in Claim 1 for the compensation of systematic path errors of a robot path motion through the correction of the path program representing the command variable of the process control wherein the systematic path errors are detected sensorially together with the random path errors and through the formation of the mean value over several workpieces, the systematic component of the path errors is reconized and through vectorial addition is automatically used for the correction of the path program.

**Revendications**

1. Procédé pour la correction de paramètres de contrôle d'un réglage d'opération, tout particulièrement pour la conservation de l'étendue du dynamique du réglage d'opération pendant le cours d'opération dans lequel des grandeurs d'opération sont enregistrées automatiquement pendant le cours d'opération, sont amenées au réglage d'opération pour traitement et sont comparées aux valeurs d'un cours d'opération mémorisé et dans lequel le réglage d'opération intervient dans l'opération en cours en réglant, caractérisé par le fait que
   - moyennant un procédé d'adaptation des informations sur le cours d'opération d'opérations de réglage antérieures, achevées et reproductibles sont enregistrées et mémorisées,
   - à partir les informations mémorisées des opérations de réglage antérieures concernant le cours respectif entier d'opération ainsi que également concernant des moments fixés respectifs d'opération des caractéristiques décrivant des marches apparaissant à maintes reprises dans les cours d'opération sont déterminées par calcul.
   - sont comparées aux valeurs des cours d'opération mémorisés adjoints et
   - à partir des résultats de comparaison des valeurs correctives des paramètres de réglage du réglage d'opération sont calculees et amenées à celui-ci.

2. Procédé suivant revendication 1, caractérisé par le fait que les modifications des grandeurs de réglage sont mémorisées comme informations qui doivent être ajustées par le réglage d'opération dans les différents cours d'opération pour atteindre le but de réglage.

3. Procédé suivant revendication 1 caractérisé par le fait que les différences de réglage sont mémorisées comme informations.

4. Procédé suivant revendication 1 caractérisé par le fait que les grandeurs de réglage elles-mêmes sont mémorisées comme informations.

5. Procédé suivant revendications 1 à 4 caractérisé par le fait que lors du procédé d'adaptation
   - les informations concernant le cours d'opération d'opérations de réglage antérieures achevées reproductibles sont enregistrées et mémorisées moyennant une première interface ('A'),

- après détermination statistique des caractéristiques décrivant des marches apparaissant à maintes reprises dans les cours d'opération les valeurs ressortissant des cours d'opération mémorisés sont introduites moyennant une deuxième interface ('B') du réglage d'opération dans le procédé d'adaptation et sont comparées aux caractéristiques et
- les valeurs correctives des paramètres de réglage calculées à partir des résultats de comparaison sont amenées au réglage d'opération moyennant une troisième interface ('C').

6. Procédé pour la conservation de l'étendue du dynamique du réglage d'opération lors du soudage, tout particulièrement pour la compensation de l'usure d'électrodes lors du soudage à résistance par points dans lequel des grandeurs d'opération sont enregistrées automatiquement pendant le procédé de soudage, sont amenées au réglage d'opération pour traitement et sont comparées aux valeurs d'un soudage mémorisé optimisé et le réglage d'opération intervient en réglant dans le procédé de soudage en cours, caractérisé par le fait que moyennant un procédé d'adaptation les modifications des grandeurs de réglage du soudage individuel sont enregistrées et mémorisées et que la correction des paramètres de réglage est dérivée des modifications mémorisées des grandeurs de réglage et est amenée comme nouvelle valeur préréglée de soudage optimisé au réglage d'opération pour le prochain soudage.

7. Procédé suivant revendication 6 caractérisé par le fait que lors du procédé d'adaptation
   - les modifications de grandeurs de réglage du soudage individuel sont enregistrées et mémorisées moyennant une première interface ('A'),
   - immédiatement après le soudage la valeur moyenne est calculée à partir des valeurs mémorisées,
   - ensuite une nouvelle valeur de départ de la grandeur de réglage est déterminée par calcul pour le prochain soudage tout en tenant compte de la valeur préréglée originaire de soudage optimisé étant introduite dans le procédé d'adaptation par-dessus une deuxième interface ('B') du réglage d'opération, et
   - l'adduction de la nouvelle valeur de départ déterminée (valeur de soudage optimisé) dans le réglage d'opération est réalisée par-dessus une troisième interface ('C').

8. Procédé suivant revendications 6 et 7, caractérisé par le fait que dans le calcul de la nouvelle valeur de départ pour le prochain soudage sont introduites des valeurs résultant de plusieurs soudages suivant la formule ci-après:

$$\beta_{i+1} = (\beta_i \times (G-1)/G) + \beta_i/G$$

G étant
le facteur de mémorisation (p.ex.: G = 5000, lors du soudage par points avec de la tôle d'acier enduite 0,8 x 0,8 mm; durée de soudage: 160 ms, force d'électrodes: 2,2 kN)
$\beta_i$ étant
la valeur de départ de la grandeur de réglage du dernier soudage
$\beta_i$ étant
la valeur moyenne arithmétique de la grandeur de réglage du dernier soudage
$\beta_{i+1}$ étant
la valeur de départ de la grandeur de réglage pour le prochain soudage.

9. Procédé suivant revendications 7 et 8 caractérisé par le fait que les première, deuxième et troisième interfaces sont dimensionnées en fonction de la construction du réglage d'opération.

10. Procédé suivant revendications 6 à 9 caractérisé par le fait que le nombre des soudages utilisés pour la correction de paramètres est choisi en fonction de l'étendue du dynamique disponible du réglage d'opération et des grandeurs d'influence statiques sur le procédé de soudage.

11. Procédé suivant revendications 8 et 10 caractérisé par le fait que les valeurs pour le facteur G sont choisies à raison du nombre de points de soudage pouvant être soudés au maximum avec une paire d'électrodes tout en supposant un réglage de soudage sans augmentation pas à pas des valeurs de courant.

12. Procédé suivant revendication 8 caractérisé par le fait que le facteur G est déterminé empiriquement et est introduit dans le procédé d'adaptation par-dessus un point d'intersection.

13. Procédé suivant les revendications 6 à 12 caractérisé par le fait que les paramètres de soudage actuels sont protocollés et les marches dans les allures des parmètres sont fait visibles.

14. Procédé suivant revendication 6 <u>caractérisé par le fait</u> que le procédé d'adaptation est utilisé pour l'exécution de différentes tâches de soudage avec un dispositif de soudage, tout en tenant compte des modifications de grandeurs d'influence statiques sur le procédé de soudage en modifiant respectivement les paramètres de soudage et en mémorisant en forme d'un nombre respectif de programmes des procédés de soudage respectifs dans le réglage d'opération et en déterminant à l'aide du procédé d'adaptation une valeur de départ corrigée pour chacun des programmes.

15. Procédé suivant revendication 14 <u>caractérisé par le fait</u> que la détermination de la valeur de départ corrigée pour chacun des programmes dans le procédé d'adaptation à raison des données du dernier soudage effectué est réalisée par la détermination de la modification relative de la nouvelle valeur de départ par rapport à la valeur de départ orginaire. Le facteur de correction étant

$$P = (100 \times (\beta_{i+1} - \beta_o)/\beta_o)/G + P_{alt}$$

et le facteur de correction en pour-cent permettant à calculer également lors d'un changement de programme de soudage une nouvelle valeur de départ valable

$$\beta_{i+1,j} = \beta_{o,j} + P \times \beta_{o,j}/100$$

et $\beta_o$ représentant la valeur de départ préréglée pour la grandeur de réglage et $j = 1, 2, 3 ... n$ (avec $n$ = nombre des programmes de soudage).

16. Procédé suivant revendication 6 <u>caractérisé par le fait</u> que le courant de soudage est choisi comme grandeur de réglage pour le réglage d'opération.

17. Dispositif pour l'exécution du procédé suivant revendications 1 à 5 avec un système réalisant l'opération et enregistrant automatiquement des grandeurs d'opération pendant le cours d'opération et avec un système de réglage (2), avec une mémoire de consigne (4) fournissant une valeur de consigne préréglée ainsi qu'avec un régulateur (5) intervenant dans l'opération en réglant dont la sortie est connectée à l'entrée et dont l'entrée est connectée à la sortie du système effectuant l'opération et dont l'entrée est réliée à la sortie du système effectuant l'opération et avec une calculatrice (7) <u>caractérisé par</u> un système d'adaptation (3) pour la correction des paramètres de réglage présentant la calculatrice (7) pour enregistrer et mémoriser des informations concernant le cours d'opération d'opérations de réglage antérieures achevées reproductibles reliée d'une part avec l'entrée à la sortie du système effectuant l'opération (1) par-dessus une deuxième interface (10) ainsi qu'avec la sortie du régulateur (5) par-dessus une première interface (9) et d'autre part par-dessus une troisième interface (11) avec la sortie de la mémoire de consigne (4) ainsi qu'avec la sortie par-dessus une quatrième interface (12) avec l'entrée de la mémoire de consigne (4), la calculatrice (7), après avoir mémorisé les informations enregistrées par-dessins les première et deuxième interfaces (9 resp. 10) des opérations de réglage antérieures concernant le cours respectif entier d'opération ainsi que des moments d'opération fixés, déterminant par calcul les caractéristiques apparaissant à meintes resprises et décrivant des marches dans les cours d'opération, ensuite comparant ces caractéristiques aux valeurs de consigne préréglées respectivement et sélectionnées de la mémoire de consigne (4) par-dessus la troisième interface (11), calculant à partir des résultats de comparaison des valeurs correctives des paramètres de réglage du réglage d'opération et inscrivant celles-ci par-dessus la quatrième interface (12) comme nouvelles valeurs de consigne dans la mémoire de consigne (4).

18. Dispositif pour l'exécution du procédé suivant revendications 6 à 16 avec une installation de soudage (1), avec un régulateur de courant alternatif (13) couplé avec des électrodes de soudage (15, 16) de l'installation de soudage par-dessus un transformateur de soudage (14) et avec une installation de réglage (2) avec une mémoire de consige (4) fournissant une valeur de départ préréglée, avec un régulateur dont la sortie est réliée à l'entrée et l'entrée à la sortie du régulateur de courant alternatif de l'installation de soudage intervenant dans l'opération de soudage en réglant et avec un dispositif à effleurement (17) couplé aux électrodes de soudage (15, 16) pour l'enregistrement des grandeurs d'opération (grandeurs de mesure), dont la sortie est connectée à l'entrée du régulateur, et avec une calculatrice (7) <u>caractérisé par</u> une installation d'adaptation (3) pour la correction automatique des paramètres de réglage à partir des modifications des grandeurs de réglage de soudages antérieurs présentant la calculatrice (7) reliée d'une part avec l'entrée à la sortie du régulateur (5) par-dessus une première interface (9) enregistrant les modifications des grandeurs de réglage du soudage individuel et d'autre part par-dessus une deuxième interface (10) avec la sortie de la mémoire de consigne (4) pour sélectionner et déposer la valeur de départ prégreglée dans la calculatrice (7) ainsi qu'avec la sortie à l'entrée de la mémoire de consigne (4) par-dessus une troisième interface (11) à l'aide de laquelle la nouvelle valeur de départ déterminée par la calculatrice (7) peut être inscrcite dans la mémoire de consigne (4).

19. Dispositif suivant revendications 17 et 18 caractérisé par le fait que les interfaces (9, 10, 11, 12) de l'installation d'adaptation (3) consistent en points d'intersection digitaux.

20. Dispositif suivant revendication 18 caractérisé par le fait que la première et la troisième interfaces (9, 11) consistent en convertisseurs analogiques digitaux et la quatrième interface (12) en un convertisseur digital-analogique.

21. Dispositif suivant revendication 18 caractérisé par le fait que le régulateur de courant alternatif (13) est un régulateru de courant thyristor.

22. Utilisation du procédé suivant revendication 1 pour travaux de service et d'entretien en déterminant à partir des modifications de grandeurs d'influence statiques des signaux de départ pour les travaux de service et d'entretien.

23. Utilisation du procédé suivant revendication 1 pour le préréglage de signaux de départ pour le changement d'outil de machines-outils à commande par programmes.

24. Utilisation du procédé suivant revendication 1 lors du soudage à résistance par points pour déterminer des signaux de départ pour le traitement mécanique de capots d'électrodes usés afin de ramener le courant de soudage dans l'étendue du dynamique approprié pour le réglage d'opération.

25. Utilistion du procédé suivant revendication 1 pour compenser les erreurs de parcours systématiques d'un mouvement de parcours de robot en corrigeant le programme de parcours représentant la grandeur de guidage du réglage d'opération en enregistrant sensoriquement les erreurs de parcours systématiques conjointement avec les erreurs de parcours aléatoires et en déterminant moyennant la formation d'une valeur moyenne pour plusieurs pièces à travailler la part systématique des erreurs de parcours et en l'utilisant automatiquement par addition vectorielle pour corriger le programme de parcours.

Fig. 1

Fig. 2

PROZENTUALE ANHEBUNG DES PHASENANSCHNITTWINKELS

ANZAHL DER SCHWEIßPUNKTE    (· 1000)

Fig. 3

SCHWEIßPROGRAMM 1

BLECHKOMBINATION: 0.75/1.0 MM

EINGETRAGEN WURDE DER BEI JEDEM 5. BAUTEIL ERMITTELTE KLEINSTE UND GRÖßTE SCHWEIßSTROM, BEZOGEN AUF EINE BLECHKOMBINATION.

JEDER STROMWERT IST DER MITTLERE EFFEKTIVWERT AUS EINER SCHWEIßUNG.

SCHWEIßSTROM

ANZAHL DER SCHWEIßPUNKTE  (· 1000)

*Fig. 4*

EP 0 489 130 B1

Fig. 5